# EUROPEAN PATENT APPLICATION

(11) **EP 4 686 873 A1**
(43) Date of publication of application: **04.02.2026**
(21) Application number: 25193154.9
(22) Date of filing: 31.07.2025
(51) Int. Cl.: F23D 14/22, F23D 14/66

(54) **HYBRID BURNER FOR INDUSTRIAL FURNACES**

(30) Priority: 31.07.2024 FR 2408480
(71) Applicant: Fives North American Combustion France SAS, 13013 Marseille (FR)
(72) Inventor: RICCI, Louis, 13013 Marseille (FR); JABLKOWSKI, Theodore, Cleveland, OH 44105 (US); GIULIACCI, Roberto, 20900 Monza (IT)
(74) Representative: Fives IP

(57) **Abstract**

The invention concerns a burner system (1) for an industrial furnace, comprising a central injector (2) extending along a longitudinal axis (X), at least one peripheral injector (3) extending along a peripheral axis (X2), a fuel injection system (4) configured to inject fuel in the central injector (2), an oxidant injection system (5) configured to inject oxidant in the central injector (2), the central injector (2) being configured to inject a mix of fuel and oxidant in the furnace, the oxidant injection system (5) being further configured to inject oxidant in the peripheral injector (3), the peripheral injector (3) comprising an electrical heater (6) configured to heat up the oxidant flowing through the peripheral injector (3).

## Description

### TECHNICAL FIELD OF THE INVENTION

The invention is applied to the field of burners for industrial furnaces utilized in processes requiring heat generation.

### TECHNOLOGICAL BACKGOUND

In a great number of industrial applications requiring heat generation, a gas or a fluid is heated up by a combustion sustained in a burner. A majority of classical burners utilize carbon-based fuels to be oxidized by an oxidant, classically air, in order to generate heat. In the context of growing needs to develop industrial solutions that reduce the consumption of carbon-based fuels, one of the alternatives is to substitute totally or partially the carbon-based fuel (natural gas for instance) by hydrogen. However, production of hydrogen requires investments into large electrolysers, which efficiency varies around 60% currently on potential hydrogen thermal energy compared to electrical energy required. Moreover, if the energy utilized to fuel the electrolyser is generated through carbon-emitting powerplants, the carbon emissions per energy unit utilized in the final process is worse due to the efficiency of the electrolysers.

Another solution resides in the implementation of electrical radiative heaters in the furnace. Such solutions require much more radiative heat transfer surface than burners, therefore they are difficult to integrate in an already existing production unit or furnace, due to lack of available surface. Moreover, the compatibility of such elements with flue gas and vapors generated in the furnace could affect the lifetime of these radiative heaters.

In other known solutions, the combustion air is heated up by an electrical heater before sending it to the burner, but this configuration has several limitations as the air temperature needs to be limited in order to avoid a significant increase of the NOx emissions due to the high flame temperature. The air temperature is also limited by the materials applied to the burner components. Indeed, a hot combustion air requires for the feeding circuits to use specific materials providing sufficient thermal and mechanical performances at a high temperature, which would drastically increase the cost and the technical complexity of the burner. Moreover, such a solution increases the volume of the components, therefore increasing the difficulty of its integration on a furnace wall.

There is a need for heating solutions for industrial applications that enable to reduce the carbon emissions and NOx emissions, while maintaining the compacity and adaptability of the classical burners.

### INVENTION PRESENTATION

In order to overcome the limitations of the known solutions, the invention proposes a burner system for an industrial furnace, comprising:
- a burner with a central injector extending along a longitudinal axis ;
- at least one peripheral injector extending along a peripheral axis;
- a fuel injection system configured to inject fuel in the central injector, an oxidant injection system configured to inject oxidant in the central injector, the central injector being configured to inject a mix of fuel and oxidant in the furnace;
- the oxidant injection system being further configured to inject oxidant in the peripheral injector, the peripheral injector comprising an electrical heater configured to heat up the oxidant flowing through the peripheral injector.

Such a burner system allows to reduce the amount of fuel needed to produce a requisite power, while enabling a peak power necessary to the transitory phases such as heating up the furnace, therefore reducing the carbon emission of the furnace per power unit. It also enables to reduce the formation of NOx during the operation of the burner system, while maintaining a stable flame shape and a low CO formation rate. The pre-heated oxidant injected through peripheral injectors reacts with the fuel in diluted conditions as its steam is mixed with flue gas from the furnace, reducing the flame temperature and therefore the NOx formation.

Advantageously but optionally, the invention is completed by the following features, taken separately or in combination.

According to one embodiment, the electrical heater comprises a electrical resistive wire, for instance nude electrical resistive wire; such an element enables to heat the flow of oxidant up to temperatures approximating 800°C, thus enabling it to produce a hot stream of oxidant, facilitating the reaction with the fuel even in diluted conditions;

According to another embodiment, the peripheral axis can be inclined of a first angle inferior to 20° towards the central axis; such a structure enables to ensure that the flow of fuel and the flow of oxidant will mix with each other in a stable location, while ensuring that the mixing will happen in diluted conditions; this allows to limit the risk of uncontrolled combustion in the furnace, and to limit the formation of NOx;

According to another embodiment, the central injector has a central outlet centered on the central axis, and the peripheral injector has a peripheral outlet centered on the peripheral axis, the center of the central outlet being positioned at a first distance from the center of the peripheral outlet, the first distance being comprised between 0,7 and 1,7 times a parametric index, the parametric index being defined by the power output P expressed in megawatt of the burner system and the first angle θ following the equation d = P^0.33 /4cosθ; such a feature allow the burner system to run in different combustion modes, such as flameless combustion, or classical combustion, thus reducing the formation of NOx;

According to another embodiment, the oxidant injection system comprises several peripheral injectors, and the central injector has a central outlet cross section of a first area, the peripheral injectors have each a peripheral outlet cross section, the sum of all the areas of the peripheral outlet cross sections being comprised between 0.4 and 0.6 times the first area; such a feature enables to get enough oxidant velocity on the peripheral ports to ensure a good mixing in the flame and the expected low NOx effect

According to another embodiment, the oxidant injection system comprises, from upstream to downstream:
- a blower unit configured to force the circulation of oxidant,
- a main control valve configured to control the airflow of the oxidant flowing through the system,
- a common manifold supplying air to the peripheral injectors and to the central injector,
- at least one peripheral channel connecting the peripheral injector to the common manifold, and at least one central channel connecting the central injector to the common manifold,
the fuel injection system comprises, upstream to downstream:
- a gas control valve configured to regulate the flow of fuel injected in the fuel injection system, the opening of the gas control valve being coupled with the main control valve mechanically or pneumatically or electronically, a fuel channel connecting the gas control valve to the central injector;

According to another embodiment, the central channel comprises a central control valve configured to alternatively allow oxidant to flow through the central channel or at least partially obstruct the central channel;

According to another embodiment, the fuel injection system comprises a power balance unit configured to adapt the quantity of fuel per oxidant unit injected in the furnace by the central injector, the power balance unit comprising a central valve mounted on the fuel channel, or a distributor mounted on the airflow detection, or a controller adapted to modify the opening command of the gas control valve, or a combination of these means.

According to another embodiment, the burner system comprises a number N of peripheral injectors 3, the number N being a function of the power output of the burner system expressed in Megawatt, the number N being comprised between 1,5*(P(MW)/100)^0,5 < N < 3*(P(MW)/100)^0,5.

According to another embodiment, the peripheral injectors are positioned structurally on the burner or through the wall outside of the structure of the burner.

According to another aspect of the invention, is described an operating method of a burner system corresponding to the invention, wherein the main injector is operated following two modes:
- a sub stochiometric condition mode during which the air and fuel mix is injected with a core lambda Lc below 0,7, for example between 0,30 and 0,5;
- a flameless combustion mode during which only fuel is injected.

Optionally but advantageously, the operating method can be completed by the following features, taken separately or in combination:

- the flow of oxidant flowing through the peripheral injector is set up to allow a total lambda ratio of the burner system comprised between 1,05 and 1,15;

- the fuel flowrate and the electrical heating of the combustion air are regulated in function of a pre-set lambda Lc, the air flowrate being increased or decreased in function of a temperature command, the fuel flowrate being adapted to match the pre-set lambda Lc in function of the modified air-flow-rate, the electrical heating being adapted to the air flowrate to ensure a required temperature of the injected air.

### DESCRIPTION OF THE DRAWINGS

The following figures are drawn for an illustrative purpose but are not meant to be limitative.
[Fig. 1] is a simplified schematic representation of a burner system corresponding to the invention.
[Fig. 2] is a simplified schematic representation of a furnace comprising a burner system corresponding to the invention.

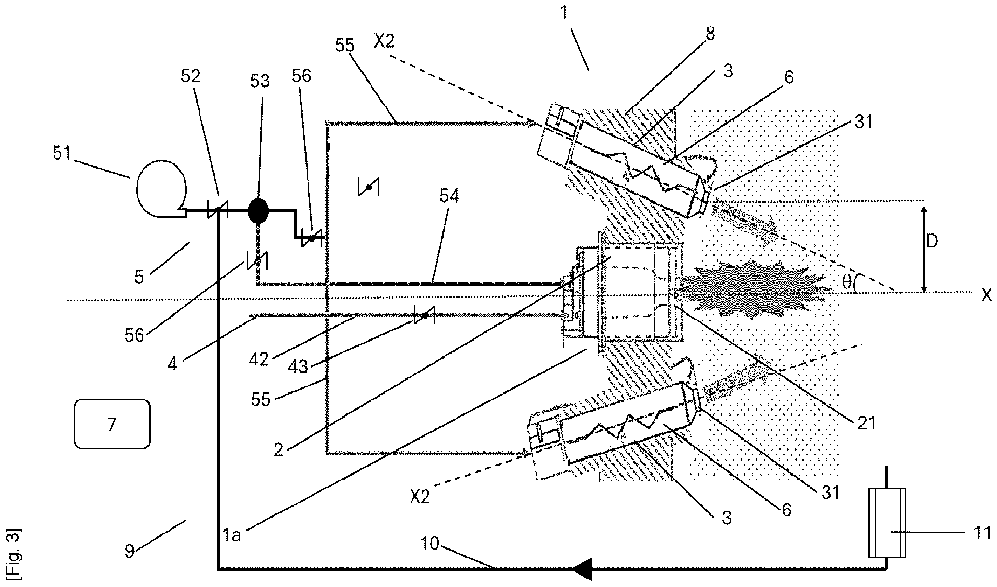

[Fig. 3] is a detailed schematic representation of an implementation of the burner system according to the invention.

### DETAILED DESCRIPTION

The invention concerns a burner system 1 for an industrial furnace, comprising:
- a central injector 2 extending along a longitudinal axis X;
- at least one peripheral injector 3 extending along a peripheral axis X2;
- a fuel injection system 4 configured to inject fuel in the central injector 2, an oxidant injection system 5 configured to inject oxidant in the central injector 2, the central injector 2 being configured to inject a mix of fuel and oxidant in the furnace;
- the oxidant injection system 5 being further configured to inject oxidant in the peripheral injector 3, the peripheral injector 3 comprising an electrical heater 6 configured to heat up the oxidant flowing through the peripheral injector 3.

A burner system 1 is defined as a system comprising a burner 1a and any device for performing the combustion of fuel, said devices being structurally not continuous with the burner 1a. A burner system 1 should be understood as a combustion system.

Such a burner system 1 would allow to reduce the fuel needed to increase the temperature of the flow of gas entering the furnace, or to avoid the need to use fuel to sustain the temperature of the furnace if the desired temperature allows it, or reduce the time required to heat up the furnace for a certain quantity of fuel used, therefore reducing the carbon emission of the furnace per power unit.

Moreover, such a structure allows to reduce the formation of NOx during the operation of the burner system 1, while maintaining a stable flame shape and a low CO formation rate. Injecting combustion air through peripheral injectors 3 instead of premixing all the reactants in the burner 1a enables to reduce both thermal and fuel NOx by minimizing the free oxygen content at the root of the flame, reducing the oxidation of Nitrogen to NOx kinetics. It is well known that NOx from combustion is mainly created from thermal NOx who is sensitive to temperature and oxygen content in the flame and fuel NOx when fuel contains nitrogen bound with hydrocarbon. The combustion air injected through peripheral injectors 3 reacts with the fuel in diluted conditions as its steam is mixed with flue gas from the furnace and/or flue gas coming from the root of the flame, reducing the flame temperature and therefore the NOx formation. The pre-heating of the air thanks to electrical heaters helps to quickly reach reaction conditions between air and fuel, sufficient temperature being needed to trigger the reaction, especially in diluted conditions caused by the injection of air through peripheral injectors 3.

Moreover, such an arrangement facilitates the operation of the burner system 1 in flameless oxidation conditions. The injection of oxidant through lateral injectors 3, pre-heated to a level of temperature enabling the reaction of oxidant with the fuel injected through the central injector 2 in diluted conditions, enables to produce a flameless oxidation reaction, therefore reducing the NOx emissions of the burner system 1.

The peripheral axis X2 is either parallel to the central axis X or inclined towards the central axis X of a first angle θ preferably inferior to 20°. The central injector 2 comprises a central outlet 21 centered on the longitudinal axis X, the peripheral injector 3 comprising a peripheral outlet 31 centered on the peripheral axis X2. Advantageously, the center of the central outlet 21 is positioned at a first distance D from the center of the peripheral outlet 31, the distance D being comprised between 0,7 and 1,7 times a parametric index d, the parametric index d being defined by the power output P of the burner system 1, expressed in Megawatt and the first angle θ following the equation d = P(MW)^0.33 /4cosθ. Such a structure enables to favorize a late mixing of the heated oxidant injected by the peripheral injectors 3 and the fuel injected by the central injector 2, in order to have the reactants react in more diluted conditions. It helps to prevent local temperature peaks and the formation of NOx, while ensuring that the reactants mix in a stable area in order to ensure that the combustion do take place and avoid the risk of accumulation of reactants in the furnace, leading to an explosion risk.

Advantageously, a distance D between 0,7 and 1,3 times the parametric index d enables to increase the stability of the combustion and ensure a better reaction of the reactants.

Advantageously, a distance D between 1,2 et 1,7 times the parametric index d is particularly suitable to operate the burner system 1 in a flameless combustion mode. The oxidant injected by the peripheral injectors 3 mixes with the flue gas circulating in the furnace, diluting the oxygen in a gaseous mix before mixing with the fuel injected by the central injector 2. The low volumetric concentration of reactants and the high temperature of the furnace and the heated oxidant coming from the peripheral injectors 3 enable to create conditions favoring a flameless combustion of the reactants rather than a classical combustion, helping to greatly reduce the formation of NOx. Advantageously, the burner system 1 comprises a control unit 7 configured to pilot the burner system 1.

Advantageously, the peripheral injectors 3 are positioned structurally on the burner 1a or through the wall 8 outside of the structure of the burner 1a. Advantageously, there is one electrical heater 6 element per peripheral injector 3. These electrical heaters are all powered in parallel. The air is balanced in such a way that all the peripheral injectors 3 have the same outlet temperature. Preferably, the electrical heaters comprise a electrical resistive wire (nude wire or other technology) configured to heat up an air stream up to 1100°C according to their technologies and process requirements.

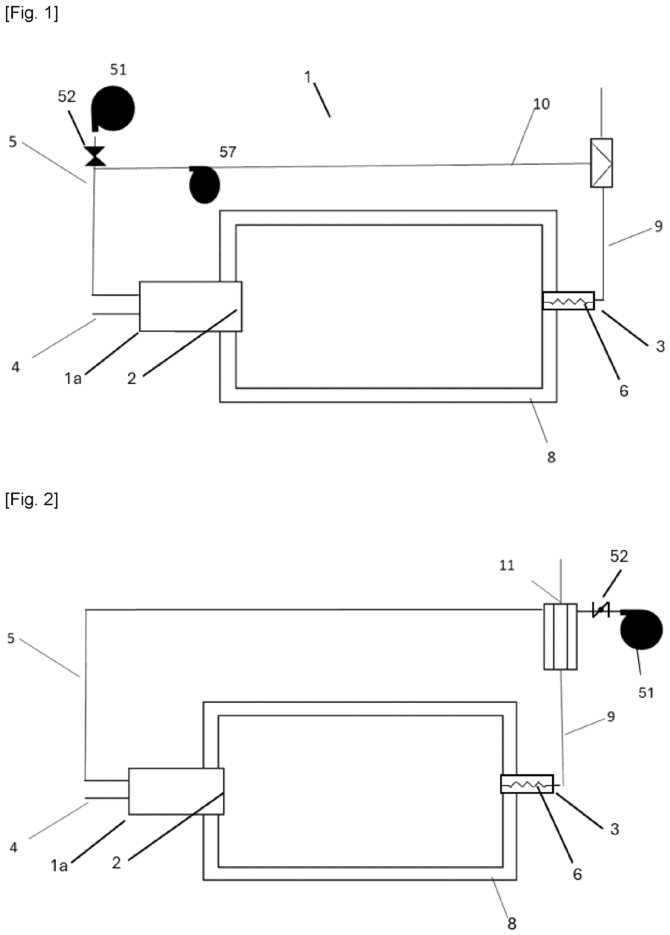

In the embodiment represented in figure 1, the oxidant injection system 5 comprises, upstream to downstream, a blower unit 51, configured to drive a flow of oxidant at a required pressure and flowrate, for a chosen burner system 1 requisite power, a main control valve 52 configured to adapt the flow of oxidant blown by the blower unit 51, a manifold 53 configured to transfer the flow coming from the main control valve 52 to a central channel 54 configured to supply oxidant to the central injector 2 and a peripheral channel 55 configured to supply oxidant to the peripheral injector 3. In the represented embodiment, the burner system 1 comprises at least two peripheral injectors 3. In such embodiment, a plurality of peripheral channels 55 are connected respectively to each of the peripheral injectors 3 and to the manifold 53.

Advantageously, the central channel 54 is equipped with a central control valve 56, configured to adapt the flow of oxidant injected through the central injector 2 to the required need. Alternatively, or optionally, the peripheral channel 55 is equipped with a peripheral control valve 57 configured to adapt the flow of oxidant injected through the peripheral injector 3 to the required need. Such a structure enables to control the proportion of oxidant injected through the central injector 2 and the peripheral injectors 3 and adapt the balance between the heating power provided by the electrical heater 6 or adapt the air lambda of the central injector 2. Notably, when the burner system 1 is piloted in a flameless combustion mode, the control unit 7 is adapted to stop the injection of oxidant through the central injector 2. **In** the embodiment illustrated, the control unit 7 is adapted to close the central control valve 56.

Air Lambda is defined as ratio between the oxidant flowrate and the oxidant stochiometric flowrate.

In the embodiment represented on figure 1, the fuel injection system 4 comprises, upstream to downstream, a fuel supply connected to a central fuel channel 42, the central fuel channel 42 being connected to the central injector 2. A gas control valve 43 is mounted on the central fuel channel 42 in order to regulate the flow of fuel running through the fuel injection system 4. Preferably, the opening of the gas control valve 43 is coupled with the main control valve 52, mechanically or pneumatically or electronically. Such a structure enables to maintain the total lambda Lt of the burner system 1, which is the air/fuel molar ratio of the burner system 1, when a modification of the power output of the burner system 1 is commanded, with a single command signal. More precisely, the total lambda Lt translates a ratio between the actual volume of air fed to the burner system 1 per mass unit of fuel and the volume of air needed to realize a stoichiometric combustion for the same mass unit of fuel.

Advantageously, the fuel injection system 4 comprises a power balance unit configured to adapt the quantity of fuel per oxidant unit injected in the furnace by the central injector 2, in order to adapt the ratio of electrical power with respect to the gas power in the total power output of the burner system 1.

In a first embodiment, the power balance unit comprises a central valve mounted on the central fuel channel 42. The central valve is configured to reduce the gas flow of the central injector 2 independently from the total airflow of the burner system 1. This embodiment enables to control the core lambda Lc of the central injector 2 even when the gas control valve 43 is coupled with the main control valve 52, pneumatically or mechanically.

In a second embodiment, the power balance unit comprises a controller configured to directly pilot the gas control valve 43 in order to adapt the gas flow of the central injector 2 independently from the total airflow of the burner system 1. This embodiment is preferred when the gas control valve is controlled electronically.

In a third embodiment, the gas control valve 43 is coupled pneumatically to main control valve 52. The power balance unit comprises a distributor which enables to modify the pressure sent to the gas control valve 43, hence modifying the coupling between the gas control valve 43 and the main control valve 52.

Optionally, the power balance unit is configured to control the central control valve 56.

### Operation modes

In a preferential embodiment, the burner system 1 is configured to operate with a total lambda Lt ratio between 1.05 and 1.2 for the maximal power. The air injected in the burner system 1 is split between the central injector 2 and the peripheral injectors 3, in such a way that the central injector 2 is configured to be operating with a core lambda Lc inferior to 0,7, for example between 0,3 and 0,5, the core lambda Lc being the air/fuel ratio of the air gas mix injected by the central injector 2. The air injected in the peripheral injectors 3 is supplied in such a way to meet the total lambda Lt ratio of the burner system 1.

### Air staged mode

The control unit 7 is configured to provide an air staged operating mode of the burner system 1, wherein the burner system 1 is operated in nominal conditions. The central injector 2 is operated in sub stoichiometric condition during which the air and fuel mix is injected through the central injector 2 with a core lambda Lc below 0,7.

### Low carbon mode

The control unit 7 is configured to provide a low carbon operating mode of the burner system 1, wherein the burner system 1 is operated at a reduced load. In such a case, the power balance unit is piloted by the control unit 7 to reduce the quantity of fuel injected through the central injector 2 and optionally adjust the air flow through the central injector 2, while the main control valve 52 is configured to balance the flow of oxidant flowing through the peripheral injector 3.

### Flameless mode

Advantageously, the control unit 7 is configured to provide a flameless oxidation operating mode of the burner system 1 during which only fuel is injected through the central injector 2. Such a mode is applied when the temperature in the furnace exceeds the fuel auto-ignition temperature. In such a case, the control unit 7 decreases drastically or stops the airflow through the central injector 2, thanks to the central control valve 56. For example, the airflow of the central injector 2 can be reduced under 10% of the total airflow of the burner system 1.

In a non-continuous operating furnace, like heat treatment furnaces, melting furnaces, wherein the furnace has production cycles with warm -up, a long stand by phase wherein the temperature is sensibly stable and a cooling phase, the burner system 1 can be operated in air-staged mode in warm-up phase, which usually requires the maximum burner system 1 duty. Advantageously the burner system 1 is configured to match the needs of the stand-by phase with its low-carbon mode. In that case, the low carbon mode is used to achieve a higher decarbonation ratio along its cycle.

In other embodiments, when the burner system 1 is used in a process requiring lower temperatures and a large convective thermal exchange, for example a drying process, the air injected through the peripheral injectors 3 can be increased, so the total lambda Lt can exceed 1,15, and/or the core lambda Lc exceeds 0,7.

Advantageously, the furnace is delimited by a wall 8. The wall 8 comprises a layer of refractory and insulating material. Preferentially, the peripheral injectors 3 are partially integrated in the wall 8, extending at least partially through the layer of refractory and insulating material, thus reducing the required volume for the implementation of the burner system 1 compared to external electrical heat exchanger.

This compact solution allows an easy application on existing furnaces type applicable both for new furnaces, but also for the revamp of existing furnaces.

This is the reason why the number of peripheral injectors 3 considered as air nozzles is larger for high-capacity burner systems 1 than the one usually applied on air staged burner.

The number of air nozzles varies according to several parameters such as burner system 1 power, furnace temperature enabling to control the CO emissions, the electrical power with respect to total burner system 1 power ratio, and if some large excess air or flameless mode are foreseen. For example, a burner 1a operating in low air excess comprises two to four peripheral injectors 3 for a burner system 1 power of approximately 200kW. This enhances the combustion thanks to a more evenly distributed air, reduce the space constraints thanks to a controlled number of peripheral injectors 3, and a decarbonation ratio comprised between 30 and 50%. Preferentially, the number N of peripheral injectors 3 in the burner system 1 is defined by the following inequation: 1,5*(P(MW)/100)^0,5 < N < 3*(P(MW)/100)^0,5. Such values enhance the performances of the burner system 1 with respect to the quality of combustion and the ratio of decarbonation.

Advantageously, as referred to figure 2, the furnace comprises an exhaust system 9 comprising a recirculation loop 10 configured to redirect the hot gases exiting the furnace toward the oxidant injection system 5. In the figure 2, as example, the recirculation loop 10 is fed thanks to a recirculation fan. Such a structure allows the reduction of the amount of energy needed to maintain a chosen temperature of the furnace if the furnace is operated with the sole peripheral injectors 3 and electrical heating element 6.

Advantageously, as referred to figure 2, the exhaust system 9 comprises a heat exchanger 11 connected with the oxidant injection system 5, configured to transfer energy from the furnace flue gas to the combustion oxidant in order to supply the peripheral injectors 3 and the central injector 2 with hot air undiluted with flue gas, enabling to avoid the exposure of electrical heaters 6 to flue gas while maximizing the system efficiency and decarbonation rate.

## Claims

1. Burner system (1) for an industrial furnace, comprising:
- a burner (1a) with a central injector (2) extending along a central axis (X);
- at least one peripheral injector (3) extending along a peripheral axis (X2);
- a fuel injection system (4) configured to inject fuel in the central injector (2), an oxidant injection system (5) configured to inject oxidant in the central injector (2), the central injector (2) being configured to inject a mix of fuel and oxidant in the furnace;
- the oxidant injection system (5) being further configured to inject oxidant in the peripheral injector (3), the peripheral injector (3) comprising an electrical heater (6) configured to heat up the oxidant flowing through the peripheral injector (3).

2. Burner system (1) of claim 1, wherein the electrical heater (6) comprises a nude electrical resistive wire.

3. Burner system (1) of claims 1 or 2, wherein the peripheral axis (X2) can be inclined of a first angle θ with respect to the central axis (X), the first angle θ being inferior to 20° and the peripheral axis (X2) being inclined towards the central axis (X).

4. Burner system (1) of claim 3, wherein the central injector (2) has a central outlet (21) centered on the central axis (X), and the peripheral injector (3) has a peripheral outlet (31) centered on the peripheral axis (X2), the center of the central outlet (21) being positioned at a first distance (D) from the center of the peripheral outlet (31), the first distance (D) being comprised between 0,7 and 1,7 times a parametric index (d), the parametric index (d) being defined by the power output P of the burner and the first angle θ following the equation d = P(MW)^0.33 /4cosθ.

5. Burner system (1) of any of the preceding claims, wherein the oxidant injection system (5) comprises several peripheral injectors (3), and wherein the central injector (2) has a central outlet (21) cross section of a first area, the peripheral injectors (3) have each a peripheral outlet (31) cross section, the sum of all the areas of the peripheral outlet (31) cross sections being comprised between 0.4 and 0.6 times the first area.

6. Burner system (1) of any of the preceding claims, wherein the oxidant injection system (5) comprises, from upstream to downstream :
- a blower unit (51) configured to force the circulation of oxidant,
- a main control valve (52) configured to control the airflow of the oxidant flowing through the system,
- a common manifold (53) supplying air to the peripheral injectors (3) and to the central injector (2),
- at least one peripheral channel (55) connecting the peripheral injector (3) to the common manifold (53), and at least one central channel (54) connecting the central injector (2) to the common manifold (53),
and wherein the fuel injection system (4) comprises, upstream to downstream:
- a gas control valve (43) configured to regulate the flow of fuel injected in the fuel injection system (4), the opening of the gas control valve (43) being coupled with the main control valve (52) mechanically or pneumatically or electronically, a fuel channel (42) connecting the gas control valve (43) to the central injector (2).

7. Burner system (1) of claim 6 combined with claim 4, wherein the central channel (54) comprises a central control valve (56) configured to alternatively allow oxidant to flow through the central channel (54) or at least partially obstruct the central channel (54).

8. Burner of claim 6 wherein the fuel injection system (4) comprises a power balance unit configured to adapt the quantity of fuel per oxidant unit injected in the furnace by the central injector (2), the power balance unit comprising a central valve mounted on the fuel channel (42), or a distributor mounted on the airflow detection, or a controller adapted to modify the opening command of the gas control valve (43), or a combination of these means.

9. Burner system (1) of any of the claims 1 to 6, wherein the burner system (1) comprises a number N of peripheral injectors (3), the number N being a function of the power output P of the burner system (1) expressed in Megawatt, the number N being comprised between 1,5*(P/100)^0,5 < N < 3*(P/100)^0,5.

10. Burner system (1) of any of the claims 1 to 7, wherein the peripheral injectors (3) are positioned structurally on the burner (1a) or through the wall (8) outside of the structure of the burner (1a).

11. Burner system (1) of any of the claims 1 to 8, wherein the burner system (1) comprises an exhaust system (9) comprising a recirculation loop (10) configured to redirect the hot gases exiting the furnace toward the oxidant injection system (5) with a recirculation fan (57).

12. Burner system (1) according to claim 11, wherein the exhaust system (9) comprises a heat exchanger (11) connected with the oxidant injection system (5), configured to transfer energy from the furnace flue gas to the combustion oxidant in order to supply the peripheral injectors (3) and the central injector (2) with hot air undiluted with flue gas.

13. Operating method of a burner system (1) of any of the claims 1 to 9, wherein the central injector (2) is operated following two modes:
- a sub stochiometric condition mode during which the air and fuel mix is injected with a core lambda Lc below 0,7, for example between 0,3 and 0,5; or
- a flameless combustion mode during which only fuel is injected.

14. Operating method of claim 13, wherein the flow of oxidant flowing through the peripheral injector (3) is set up to allow a total lambda ratio of the burner system (1) comprised between 1,05 and 1,15.

15. Operating method of any of the claims 13 to 14, wherein the fuel flowrate and the electrical heating (6) of the combustion air are regulated in function of a pre-set core lambda Lc, the air flowrate being increased or decreased in function of a temperature command, the fuel flowrate being adapted to match the pre-set core lambda Lc in function of the modified air-flow-rate, the electrical heating (6) being adapted to the air flowrate to ensure a required temperature of the injected air.
